# EUROPÄISCHE PATENTSCHRIFT

(11) **EP 1 370 160 B1**
(45) Veröffentlichungstag und Bekanntmachung des Hinweises auf die Patenterteilung: **30.03.2011**
(21) Anmeldenummer: 02716749.3
(22) Anmeldetag: 08.02.2002
(51) Int. Cl.: A23L 1/40, A23P 1/02

(54) **MEHRKOMPONENTEN-BRÜHARTIKEL FÜR DIE ZUBEREITUNG VON FLÜSSIGEN SPEISEN ODER SPEISEBESTANDTEILEN**
MULTI-INGREDIENT STOCK CUBE FOR PREPARATION OF LIQUID FOODS OR FOOD COMPONENTS
BOUILLON CUBE A PLUSIEURS CONSTITUANTS POUR LA PREPARATION D'ALIMENTS OU D'INGREDIENTS LIQUIDES

(30) Priorität: 06.03.2001 DE 20103914 U
(43) Veröffentlichungstag der Anmeldung: 17.12.2003
(73) Patentinhaber: SOCIETE DES PRODUITS NESTLE S.A., 1800 Vevey (CH)
(72) Erfinder: LENOBLE, Henri-Pierre, CH-8405 Winterthur (CH)
(74) Vertreter: Thomas, Alain
(86) Internationale Anmeldenummer: PCT/EP2002/001346
(87) Internationale Veröffentlichungsnummer: WO 2002/069742

(56) Entgegenhaltungen:
- EP-A- 0 888 723
- WO-A-98/12934
- DE-B- 1 043 052
- US-A- 3 666 491
- PATENT ABSTRACTS OF JAPAN vol. 010, no. 366 (C-390), 6. Dezember 1986 (1986-12-06) -& JP 61 162158 A (SUNTORY LTD), 22. Juli 1986 (1986-07-22)
- DATABASE WPI Section Ch, Week 198537 Derwent Publications Ltd., London, GB; Class D13, AN 1985-225785 XP002208749 & JP 60 145072 A (SUGISAKI K), 31. Juli 1985 (1985-07-31)
- DATABASE WPI Section Ch, Week 199234 Derwent Publications Ltd., London, GB; Class D13, AN 1992-280095 XP002208750 & JP 04 190771 A (AMANO JITSUGYO KK), 9. Juli 1992 (1992-07-09)
- DATABASE WPI Section Ch, Week 198910 Derwent Publications Ltd., London, GB; Class D11, AN 1989-072131 XP002208751 -& JP 01 023866 A (NICHIREI KK), 26. Januar 1989 (1989-01-26)
- DATABASE WPI Section Ch, Week 199110 Derwent Publications Ltd., London, GB; Class D13, AN 1991-070264 XP002208752 -& JP 03 019679 A (MIYASAKA JOZO KK), 28. Januar 1991 (1991-01-28)
- DATABASE WPI Section Ch, Week 198646 Derwent Publications Ltd., London, GB; Class D11, AN 1986-302566 XP002208753 & JP 61 224955 A (TAGUCHI SEIMENSHO), 6. Oktober 1986 (1986-10-06)

## Beschreibung

Die vorliegende Erfindung betrifft ein neuartiges Erzeugnis für die küchenmäßige Zubereitung von flüssigen Speisen oder Speisenbestandteilen wie Brühen, Saucen oder Suppen aus festen Brühmassen, die in Form fester, in der Regel einzeln verpackter Formkörper in den Handel gebracht werden.

Es ist bekannt, für die Zubereitung von flüssigen Speisen oder Speisenbestandteilen Trockenprodukte zu verwenden, die durch Zugabe von Wasser, in der Regel von heißem bis siedendem Wasser, in das gewünschte Küchenerzeugnis überführt werden können. Derartige Erzeugnisse werden im Rahmen der vorliegenden Anmeldung als Brüherzeugnisse auf der Basis von Brühmassen bezeichnet, wobei die Bezugnahme auf das "Brühen" keine irgendwiegeartete Einschränkung auf eine Zubereitung mit heißem oder kochendem Wasser bedingen soll. Brühmassen im Sinne der vorliegenden Erfindung können somit auch Massen sein, die sich im kalten oder mäßig warmem Wasser unter Bildung des gewünschten Küchenprodukts auflösen oder dispergieren lassen.

Neben pulverförmig oder granulatförmig in den Handel gebrachten Brüherzeugnissen sind seit langen Jahren insbesondere sogenannte Brühwürfel bekannt, die in der Regel würfel- oder quaderförmige, einzeln verpackte Formkörper sind, die in zwei Grundqualitäten existieren, und zwar in Form sogenannter harter Brühwürfel, die aus Pulver gepreßt werden und beim Zerdrücken zerbröseln, sowie in Form sogenannter weicher Brühwürfel, die aus pastösen Massen durch Formen erzeugt werden und eine eher plastische Konsistenz aufweisen.

Die vorliegende Erfindung befasst sich in erster Linie mit einer Neuentwicklung auf dem Gebiet von Produkten, die als Brühwürfel im herkommlichen Sinne bezeichnet werden können, die im Rahmen der vorliegenden Erfindung, um eine Festlegung auf eine bestimmte Form zu vermeiden, jedoch als "Brühartikel" bezeichnet werden.

Übliche Brühwürfel werden aus einheitlichen Brühmassen vorgegebener Zusammensetzung entweder durch Pressen, Formen oder Extrudieren geformt. Handelsübliche Brühwürfel, die in der Regel eckig und einzeln oder zu mehreren in Papier verpackt in den Handel gebracht werden, weisen im unverpackten Zustand in der Regel ein einheitliches Aussehen auf, und es ist ihnen als solchen meist nicht anzusehen, was für ein Produkt mit welchen Geschmacks- und Aromanoten aus ihnen hergestellt werden kann.

Aus der JP 611 621 58 ist eine Zubereitung bekannt, die eine fest-pastöse und eine gefriergetrocknete Komponente aufweist. DE 1043 052 lehrt ein Verfahren zum Herstellen von Formkörpern kochfertiger Suppenerzeugnisse.

Es ist Aufgabe der vorliegenden Erfindung, als Formkörper in den Handel gebrachte Brühmassen, die im Rahmen der vorliegenden Erfindung als "Brühartikel" bezeichnet werden, auf neuartige Weise so auszugestalten, dass der Verbraucher aus dem Aussehen des jeweiligen unverpackten Brühartikels unmittelbar Informationen zur Art des daraus erhaltenen Erzeugnisses erhält, und dass in einem einzigen Brühartikel verschiedenartige Ausgangsbestandteile für die daraus zu bereitende flüssige Speise vereinigt werden können.

Diese Aufgabe wird bei einem erfindungsgemäßen Brühartikel für die küchenmäßige Zubereitung von flüssigen Speisen oder Speisenbestandteilen unter Verwendung fester Brühmassen oder Brühmischungen durch die Merkmale des Auspruchs 1 gelöst.

Die mindestens zwei Teilvolumina sind Teilvolumina einer Brühwürfel-Verpackungseinheit , wobei in einem solchen Fall eines der Teilvolumina eine Schicht einer festen Brühmasse sein kann, das andere Teilvolumen aber auch als lockere, nicht zusammenhaltende Schicht aus einem Pulver und/oder kleinen Pflanzenteilen, z.B. Kräutern, Gewürzen oder Gemüsestückchen, vorliegen kann, und zwar in der gleichen Verpackung von Brühwürfelform

Geformt bedeutet dabei auch "im wesentlichen formstabil", was heißt, daß der Begriff "Brühartikel" nicht für fliess- oder schüttfähigen Massen, z.B. lockere Pulver oder Granulate oder Flüssigkeiten stehen soll. "Geformt" oder "formstabil" soll bedeuten, dass der Brühartikel in seiner ihn umhüllenden Verpackung die ihm bei der Herstellung verliehene Form beim Vertrieb im wesentlichen beibehält, so lange keine nennenswerten externen mechanischen Kräfte einwirken. So sind Brühartikel im Sinne der vorliegenden Beschreibung auch dann "formstabil", wenn sie z.B. mit der Hand zerdrückt oder plastisch verformt werden können.

Ein erfindungsgemäßer Mehrkomponenten-Brühartikel kann auf an sich bekannte Weise durch Pressen von Pulvermaterialien, durch Formen von formbaren Massen bis hin zum Gießen oder durch Extrudieren hergestellt werden. Zur Herstellung eines direkt bei der Herstellung in Verpackungspapier oder Verpackungsfolie verpackten Brühartikels können dabei auch bekannte Tablettier-Formmaschinen, z.B. solche vom Typ Corazza, verwendet werden, bei denen die Ausgangsmassen in vorher mit Verpackungsmaterial beschickten Formhohlräumen tablettiert bzw. geformt werden.

In einem erfindungsgemäßen Mehrkomponenten-Brühartikel können Brühmassen unterschiedlichster Art kombiniert werden, und zwar 2, 3 oder mehr unterschiedliche Massen, die unterschiedlich eingefärbt sind.

Ein erfindungsgemäßer Mehrkomponenten-Brühartikel kann die Form und die Konsistenz eines üblichen harten oder weichen Brühwürfels aufweisen, die Formgebung kann jedoch gegebenenfalls auch eine andere sein, so dass beispielsweise ein Brühartikel in Tafelform, ähnlich einer Schokoladentafel, erhalten wird, oder aber auch in abgerundeter Form, wobei insbesondere bei der Herstellung in Formen oder beim Extrudieren prinzipiell eine große Formenvielfalt möglich ist.

Er kann auch die Form eines üblichen verpackten Brühwürfels aufweisen, wobei die Verpackung zwei Teilvolumina zusammenhält, die sich leicht voneinander trennen lassen und von denen eines auch eine lockere, nach Entfernen der Verpackung zerfallende Masse, z.B. aus Pflanzenteilen wie Gewürzen und Gemüsestückchen, enthalten kann.

Die Erfindung wird nachfolgend an Hand von Produkten, die die übliche Quader- oder Ziegelform herkömmlicher Brühwürfel aufweisen, noch näher erläutert. Dabei wird auf vier Figuren Bezug genommen, die Beispiele für Gestaltungen von Mehrkomponenten-Brühartikeln aus zwei Brühmassen bzw. Brühmischungen für verschiedene Speisenbestandteile zeigen.

In den Figuren zeigen:
- Figur 1: einen Brühartikel in Form eines formstabilen Körpers mit einem Schichtaufbau aus zwei festen Brühmassen in zwei übereinanderliegenden Schichten (1,2); (nicht zur Erfindung gehörig)
- Figur 2: eine anderen Zweikomponenten- Brühartikel, bei dem die beiden Brühmassen (1',2') seitlich miteinander verbunden sind, so dass eine andere optische Struktur erhalten wird; (nicht zur Erfindung gehörig)
- Figur 3: eine Ansicht eines Schnitts durch eine erfindungsgemässe Ausführungsform, bei der die beiden Komponenten des Brühartikels in einer gemeinsamen Folienver- packung (3) als schichtförmig übereinander ange- ordnete Teilvolumina (1", 2") vorliegen, von denen das untere von einer lockeren Masse aus Kräutern (4) und Gemüsestückchen (5) gebildet wird; und
- Figur 4: eine Ansicht auf den in Figur 3 im Schnitt darge- stellten Brühartikel, nach dem Öffnen der Verpak- kungsfolie (3).

Die Figuren zeigen drei verschiedene Beispiele für Möglichkeiten, zwei unterschiedliche Brühmassen bzw. Brühmischungen zu einem Zweikomponenten-Brühwürfel zu vereinigen. Abgesehen davon, daß sie ein unterschiediches Erscheinungsbild aufweisen, können die verschiedenen gezeigten Zweikomponenten-Brühwürfel auch mit Hilfe unterschiedlicher Verfahren hergestellt werden.

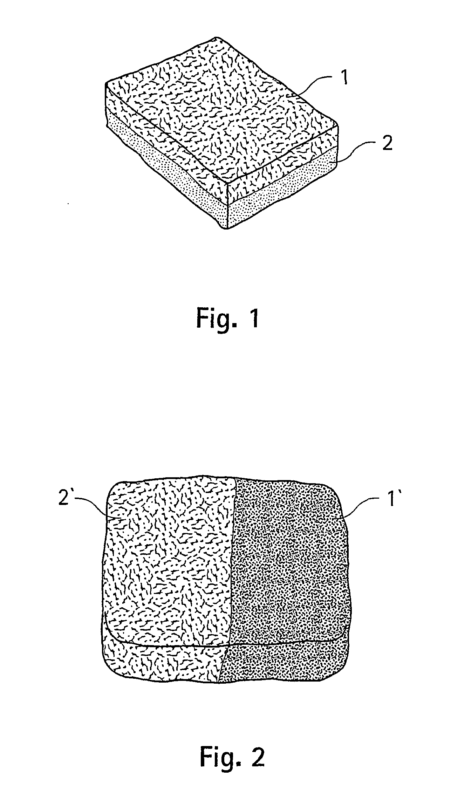

Bei einem Brühwürfel gemäß Figur 1 sind zwei unterschiedlich eingefärbte Brühmassen 1 und 2, die sinnvollerweise auch unterschiedlich zusammengesetzt sind, schichtweise übereinander angeordnet und zu einem formstabilen Brühwürfel-Körper verbunden, was beispielsweise dadurch erfolgen kann, dass man zwei unterschiedlich zusammengesetzte Ausgangsmassen in einer Form übereinanderschichtet, gegebenenfalls nach Vorverdichtung der ersten Lage, und unter mehr oder weniger hohem Druck und unter Verdichtung/Verpressen zu tablettenartigen Produkten verarbeitet. Herstellungssysteme für derartige schichtförmig aufgebaute Tabletten sind grundsätzlich bekannt, und es können alle geeigneten Herstellungsverfahren angewandt werden, ohne dass eine Beschränkung auf irgendein spezielles Verfahren erfolgen soll. Die Formung kann dabei auch in einem Schritt mit der Verpackung des Brühwürfels durch gleichzeitige Umhüllung des formgepreßten Brühwürfels mit einem Verpackungspapier bzw. einer-Verpakkungsfolie, z.B.-in einer Tablettieranlage vom Typ Corazza, erfolgen.

Das gleiche gilt für einen Zweikomponenten-Brühwürfel, bei dem die unterschiedlichen Brühmassen 1' und 2' wie in Figur 2 gezeigt angeordnet sind. Auch ein derartiger Brühwürfel, kann in Formen hergestellt werden, er kann jedoch auch auf günstige Weise durch Extrudieren zweier Brühmassen Seite an Seite durch eine gemeinsame Formdüse und Schneiden des erhaltenen Strangs hergestellt werden.

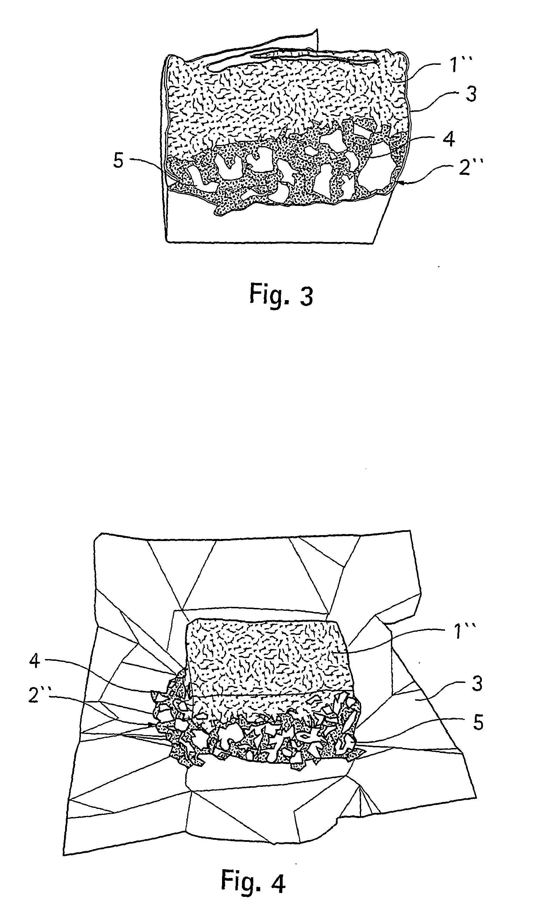

Zweikomponenten-Brühartikel, bei denen eine der Komponenten eine Schicht einer lockeren Masse mit keinem inneren Zusammenhalt ist, wie sie beispielhaft in den Figuren 3 und 4 gezeigt werden, können grundsätzlich ähnlich wie Brühartikel gemäß Figur 1 hergestellt werden, und zwar indem man in mit Verpackungsmaterial 3 ausgelegte Formvertiefungen einer Tablettierpresse zuerst eine lockere Masse 2" aus Pflanzenteilen 4, z.B. Kräutern, Gewürzen und/oder Gemüsestückchen 5 einfüllt, und darauf eine pastöse Brühmasse 1", wonach der Inhalt der Formvertiefung mehr oder weniger stark verdichtet und dabei geformt wird und von einem Verpackungsmaterial 3 umhüllt wird, das die beiden Komponenin Würfelform zusammenhält.

Die erfindungsgemäßen Mehrkomponenten-Brühwürfel können in beliebiger Größe hergestellt werden, und die Seitenlängen können beispielsweise von 10 mm bis 400 mm betragen, je nach dem vorgesehenen Endverwendungszweck.

In einem erfindungsgemäßen Mehrkomponenten-Brühwürfel können die unterschiedlichsten Brühmassen miteinander kombiniert werden. Die Brühmassen können solche für verschiedene Arten von Fleischbrühen und/oder vegetarischen Brühen sein, die auf beliebige Weise miteinander kombiniert werden können. Beispielsweise kann eine Brühmasse für Fleischbrühe mit einer Brühmasse für eine Gemüsebrühe kombiniert werden, beispielsweise Rindfleisch- mit Zwiebelgeschmack. Es können auch unterschiedliche tierische Brühen kombiniert werden, beispielsweise Hühnerbrühe und Schweinefleischbrühe. Gleichermassen können auch unterschiedliche Gemüsebrühen miteinander kombiniert werden, beispielsweise solche mit Tomaten- und mit Knoblauchgeschmack, oder mit einem löslichen Bindemittel schichtartig verfestigte Kräuter und Gewürze. In den erfindungsgemäßen Mehrkomponenten-Brühwürfeln können die kombinierten Brühmassen zu etwa gleichen Anteilen vorhanden sein, ein erfindungsgemäßer Mehrkomponenten-Brühwürfel kann jedoch auch bis zu 99 % aus einer einzigen Brühmasse bestehen und mit einer nur relativ dünnen Schicht einer anderen Brühmasse kombiniert sein.

Die miteinander kombinierten Brühmassen weisen vorzugsweise entweder aufgrund ihrer Grundzusammensetzung oder aufgrund einer speziellen Einfärbung mit geeigneten Lebensmittelfarbstoffen unterschiedliche Farben auf, wobei die Farben vorzugsweise so gewählt werden, dass eine bestimmte Farbe einem bestimmten Produkt zugeordnet ist und insbesondere ein professioneller Koch anhand der Farbe sofort den Typ der Brühmasse erkennen kann. Die unterschiedlichen miteinander in einem Brühartikel vereinigten Brühmassen können jedoch, gegebenenfalls zusätzlich, auch taktil unterschiedlich sein, d.h. beim Tasten unterschiedliche Bereiche erkennen lassen. Die Unterschiede können sich als unterschiedliche Rauhigkeiten zeigen, die beispielsweise durch die Art der Zusammensetzung bedingt sein können, die Unterschiede können aber auch dadurch bedingt oder verstärkt werden, dass man bei der Formung des Brühartikels für unterschiedliche Oberflächenstrukturen bzw. Oberflächenprofile sorgt, beispielsweise durch Verwendung entsprechender Formhälften oder Extrusionsdüsen mit unterschiedlichen Profilen im Umfangsbereich.

Die unterschiedlichen Brühmassen bzw. Brühmischungen können auch unterschiedliche Festigkeiten und einen unterschiedlichen inneren Zusammenhalt aufweisen. Z.B. können Brühmischungen aus Pflanzenteilen als lockere Schicht(en) mit relativ geringem innerem Zusammenhalt eines Brühwürfels gemäß Fig.3 und 4 vorliegen.

Grundsätzlich entsprechen die Zusammensetzungen der miteinander kombinierten Brühmassen, die in den erfindungsgemäßen Mehrkomponenten-Brühwürfeln verwendet werden, herkömmlichen Massen für Brühwürfel, und zwar entsprechend den Rezepten für herkömmliche harte oder weiche Brühwürfel. Derartige Zusammensetzungen weisen in der Regel auf:

| | |
|---|---|
| 30 bis 70 Gew.-% | Salz, |
| bis zu 25 Gew.-%, | vorzugsweise 5 bis 25 Gew.-%, Glutamat, |
| 1 bis 59 Gew.-% | Füllstoffe (beispielsweise Maltodextrin zur Verbesserung der Kohäsion, eine oder mehrere Stärke(n) wie z.B. Mais- oder Kartoffelstärke, sowie gegebenenfalls Laktose oder Molkenpulver) |
| 0 bis 50 Gew.-% | Fett, beispielsweise ein Tier- oder Pflanzenfett, wobei insbesondere Palmfett hervorzuheben ist, |
| 1 bis 15 Gew.-% | Aromabestandteile, beispielsweise Fleischaromen, würzige Aromakonzentrate, Gewürze oder lebensmitteltechnisch erzeugte Aromen, |
| 0 bis 10 Gew.-% | Fleisch, zum Beispiel in Form von Fleischextrakt oder Fleischpulver, |
| 0 bis 10 Gew.-% | Gemilsebestandteile, beispielsweise Petersilie, kleine Stücke von Karotten, Zwiebeln und ähnlichen Gemüsen oder Gemüseextrakt, |
| 0 bis 10 Gew.-% | Färbemittel, beispielsweise Karamelfarbe, Curcuma, Paprika (das auch in Form eines flüssigen Oleoresins unter Sprühen zugesetzt werden kann), |
| 0 bis 10 Gew.-% | weitere funktionelle Bestandteile, einschließlich Ribotide, Vitamine, Mineralien, restliches Wasser. |

Die genannten Bestandteile werden üblicherweise als trockene Bestandteile oder pastenförmige Rohmaterialien ausgewogen und mit oder ohne Zugabe von festem oder flüssigem Fett miteinander vermischt, und die erhaltenen verschiedenen Brühmassen werden dann z.B. in eine übliche Tablettieranlage, eine andere übliche Presse oder einen Zweikomponentenextruder eingegeben, um daraus Zwei-(oder Mehr-)komponenten-Brühwürfel herzustellen.

Vorteile erfindungsgemäßer Mehrkomponenten-Brühartikel sind einerseits die visuelle und/oder taktile Identifizierbarkeit der Produkte aufgrund des sichtbaren Schichtaufbaus. Zusätzliche Vorteile können sich auch dadurch ergeben, dass man Brühmassen miteinander kombinieren kann, die Bestandteile enthalten, die bei ihrer direkten Vermischung in unerwünschter Weise wechselwirken und dadurch z.B. die Lagerzeiten negativ beeinflussen. Ferner können auch Produkte mit unterschiedlicher Auflösezeit kombiniert werden, was für bestimmte Anwendungen ebenfalls vorteilhaft sein kann.

Produkte von der Art des in den Figuren 3 und 4 gezeigten Mehrkomponenten Brühartikels weisen zwei Schichten (Teilvolumina) auf, die sich relativ leicht voneinander trennen lassen und dadurch mit einem zeitlichen Abstand unabhängig voneinandner verarbeitet werden können. Z.B. kann aus der Brühmasse der oberen Schicht zuerst eine Fleischbrühe oder Hühnerbrühe hergestellt werden, der dann die lockeren Kräuterbestandteile der unteren Schicht erst direkt vor dem Servieren zugegeben werden können. Es kann dadurch vermieden werden, daß die Kräuterbestandteile unerwünscht lange mit heißem oder siedendem Wasser in Kontakt kommen und dadurch an Aroma verlieren.

Nachfolgend wird die Erfindung anhand eines konkreten Ausführungsbeispiels noch näher erläutert.

### Beispiel 1 (nicht zur Erfindung gehörig) : Herstellung eines schichtförmig aufgebauten harten Zweikomponenten-Brühwürfels

Zur Herstellung eines harten Zweikomponenten-Brühwürfels, in dem Brühmassen für Hühnerbrühe und Rindfleischbrühe miteinander kombiniert sind, wird wie folgt vorgegangen: Es werden zwei Ansätze à 500 kg für Hühnerbrühe bzw. Rindfleischbrühe hergestellt. Die Masse für Hühnerbrühe wird unter Verwendung der folgenden Zutaten in den angegebenen Mengen hergestellt:

| Bestandteil | | |
|---|---|---|
| Salz | 250 | kg |
| Maltodextrin | 40 | kg |
| Glutamat | 70 | kg |
| Maisstärke | 40 | kg |
| Pflanzliches Fett | 60 | kg |
| Hühnerfett | 15 | kg |
| Hühnerpulver | 10 | kg |
| Hühneraroma | 11 | kg |
| Curcuma | 4 | kg |

Die genannten Rohmaterialien wurden in einem 1200 Liter-Mischer unter doppeltem Vermischen und einfacher Fettinjektion vermischt.

In ähnlicher Weise wurde die Rindfleisch-Brühmasse aus den folgenden Bestandteilen hergestellt:

| Bestandteil | | |
|---|---|---|
| Salz | 250 | kg |
| Maltodextrin | 40 | kg |
| Glutamat | 70 | kg |
| Maisstärke | 30 | kg |
| Pflanzliches Fett | 60 | kg |
| Rinderfett | 15 | kg |
| Rinderpulver | 10 | kg |
| Rindfleischextrakt | 10 | kg |
| Hilhnergeschmaek | 11 | kg |
| Karamel | 4 | kg |

Die genannten Bestandteile der Rindfleischbrühmasse wurden wie die der Brühmasse für Hühnerbrühe vermischt.

Die beiden erhaltenen Brühmassen-Mischungen zeigten eine gute Fließfähigkeit und ließen sich ohne Probleme z.B. zwei Tage in 1000 Liter-Behältern lagern.

Unter Verwendung einer rotierenden Tablettierpresse wurden die Brühmassen zur Herstellung von Zweikomponenten-Brühwürfeln verpreßt. Dazu werden die beiden Mischungen zwei verschiedenen Zuführtrichtern zugeführt, die zwei unterschiedliche Dosiersysteme einer Presse speisen. Die Rindermischung wird zuerst in 5 g-Portionen in die Formlöcher der Tablettierpresse eindosiert, wonach die Hühnermischung ebenfalls in 5 g Portionen in die gleichen Formlöcher auf die Rindermischung aufdosiert wird. Die aufeinandergeschichteten Massen werden zu einer Tablette mit zwei Schichten verpreßt und aus der Form ausgestoßen.

Die erhaltenen Zweikomponenten-Tabletten von jeweils 10 g weisen eine gleichförmige Form mit zwei visuell erkennbaren verschiedenen Schichten auf. Ein Beispiel eines derartigen Produkts ist in Figur 1 gezeigt. Die Härte sowie die anderen physikalischen Eigenschaften der erhaltenen Brühwürfeltablette sind befriedigend.

Neben der Lösung der oben genannten Aufgaben zeichnen sich die erfindungsgemäßen Mehrkomponenten-Brühwürfel auch durch ein interessantes, gefälliges Aussehen aus und stellen ein neuartiges Küchenprodukt für den Einzelverbraucher oder für kommerzielle "Convenience-Food"-Anwendungen där.

### Beispiel 2: Herstellung eines zwei schichtförmige Teilvolumina enthaltenden verpackten Zweikomponenten-Brühwürfels (Hühnerbrühe mit Kräutermischung)

Zur Herstellung eines verpackten Zweikomponenten-Brühartikels, wie er in den Figuren 3 und 4 gezeigt ist, werden einerseits durch trockenes Vermischen eine Kräutermischung aus 20 Gew.-% Petersilienflocken und 80 Gew.-% Karottenstückchen, und andererseits eine Brühmasse für eine Hühnerbrühe aus 5 Gew.-% Hühnchenbasis, 21,7 Gew.-% Palmfett, 45 Gew.-% Kochsalz, 2,4 Gew.-% Hefe, 13 Gew.-% Glutamat, 3 Gew.-% Zucker, 6,8 Gew.-% Weizengrieß, 0,8 Gew.-% Hühnchenfleisch, 1,6 Gew.-% Zwiebel, 0,2 Gew.-% Inosin-5'-monophosphat (IMP) und 0,5 Gew.-% Curcuma bereitet, wobei man zur Herstellung letzterer das geschmolzene Palmfett mit den restlichen Bestandteilen vermischte und kristallisieren ließ.

Die beiden Mischungen werden in unterschiedliche Zuführtrichter gegeben. Dann wird zuerst unter Verwendung einer Pulver-Dosiervorrichtung die Kräutermischung in einzelnen Portionen in mit Verpackungspapier vorbeschickte Formhohlräume einer Tablettierpresse gegeben, und unmittelbar danach wird unter Verwendung einer Kolben-Dosiervorrichtung in jeden Formhohlraum die pastenartige Masse für Hühnerbrühe gegeben. Die gebildeten viereckigen Formkörper werden von dem papierartigen Verpackungsmaterial umhüllt.

Nach dem Öffnen der Verpackung des Brühwürfels, wie in Figur 4 gezeigt, werden zwei Schichten freigelegt, von denen die obere aus einer geformten Brühmasse für Hühnerbrühe besteht und abgehoben und zur Herstellung der Hühnerbrühe verwendet werden kann. Die auf dem Verpackungspapier zurückbleibende Kräutermischung kann dann später der fertigen Hühnerbrühe zugegeben werden.

Selbstverständlich können erfindungsgemäße Brühartikel auch andere Kombinationen von Brühmassen und/oder Brühmischungen enthalten als oben durch Beispiele erläutert wird, und derartige Modifikationen werden selbstverständlich ebenfalls vom Schutzbereich der vorliegenden Anmeldung umfasst.

## Patentansprüche

1. Brühartikel für die küchenmäßige Zubereitung von flüssigen Speisen oder Speisenbestandteilen unter Verwendung fester Brühmassen oder lockerer Brühmischungen, **dadurch gekennzeichnet, dass** der Brühartikel ein geformter Mehrkomponenten-Brühartikel ist, der mindestens zwei visuell und/oder taktil voneinander unterscheidbare Teilvolumina aufweist, die Nahrungsmittelbestandteilen mit verschiedenen Zusammensetzungen entsprechen, wobei der Mehrkomponenten-Brühartikel:
- ein durch Pressen, Formen, Giessen oder Extrudieren hergestellter Formkörper ist,
- ein von einem papier-oder folienartigen Verpackungsmaterial umhüllter Formkörper ist,
wobei der vom Verpackungsmaterial umhüllte Formkörper aus mindestens zwei schichtförmigen Teilvolumina aufgebaut ist, von denen eines von einer lockeren Masse ohne inneren Zusammenhalt gebildet wird.

2. Mehrkomponenten-Brühartikel nach Anspruch 1, **dadurch gekennzeichnet, dass** die die verschiedenen Abschnitte bildenden Brühmassen unterschiedliche Lebensmittelfarbstoffe enthalten.

3. Mehrkomponenten-Brühartikel nach einem der vorausgehenden Ansprüche, **dadurch gekennzeichnet, dass** die verschiedenen Abschnitte unterschiedliche Oberflächenrauhigkeiten und/oder unterschiedliche Oberflächenprofile aufweisen.

4. Brühartikel nach Anspruch 1, **dadurch gekennzeichnet, dass** die lockere Masse eine Masse aus Pflanzenteilchen, insbesondere aus Kräuterflocken, Gewürzen und/oder Gemüsestückchen, ist.

5. Mehrkomponenten-Brühartikel nach einem der vorausgehenden Ansprüche, **dadurch gekennzeichnet, dass** die in dem Mehrkomponenten-Brühartikel kombinierten unterschiedlichen Brühmassen und Brühmischungen ausgewählt sind aus Brühmassen und Brühmischungen für Fleisch-und Gemüsebrühen.

6. Mehrkomponenten-Brühartikel nach Anspruch 5, **dadurch gekennzeichnet, dass** die Brühmassen für Fleischbrühen solche für Rindfleisch-, Schweinefleisch-oder Hühnerbrühe sind und die Brühmassen für Gemüsebrühen solche für Brühen auf Zwiebel-, Knoblauch-, Tomaten-, Kräuter- und/oder Gewürzbasis sind.

7. Mehrkomponenten-Brühartikel nach einem der vorausgehenden Ansprüche, **dadurch gekennzeichnet, dass** er ein harter oder weicher Brühwürfel für die Zubereitung von Brühen, Saucen oder Suppen ist.

## Claims

1. Stock article for the culinary preparation of liquid foods or food ingredients using solid stock mixes or loose stock mixtures, **characterized in that** the stock article is a shaped multi-component stock article, which has at least two subdivisions which can be differentiated from one another visually and/or by tactile means, and which correspond to foodstuff ingredients having different compositions, wherein the multi-component stock article:
- is a shaped body produced by pressing, moulding, casting or extrusion,
- is a shaped body enclosed by a paper-like or film-like packaging material,
wherein the shaped body enclosed by the packaging material is made up of at least two layered subdivisions, one of which being formed from a loose mix having no internal cohesion.

2. Multi-component stock article according to claim 1, **characterized in that** the stock mixes forming the different sections comprise different food colourings.

3. Multi-component stock article according to anyone of the preceding claims, **characterized in that** the various sections have differing surface roughnesses and/or differing surface profiles.

4. Stock article according to claim 1, **characterized in that** the loose mix is a mix of plant pieces, in particular herb flakes, spices and/or vegetable pieces.

5. Multi-component stock article according to anyone of the preceding claims, **characterized in that** the different stock mixes and stock mixtures combined in the multi-component stock article are selected from stock mixes and stock mixtures for meat stocks and vegetable stocks.

6. Multi-component stock article according to claim 5, **characterized in that** the stock mixes for meat stocks are those for beef stock, pork stock or chicken stock, and the stock mixes for vegetable stocks are those for stocks based on onions, garlic, tomato, herbs and/or spices.

7. Multi-component stock article according to anyone of the preceding claims, **characterized in that** it is a hard or soft stock cube for preparing stocks, sauces or soups.

## Revendications

1. Article de bouillon pour la préparation culinaire d'aliments liquides ou d'ingrédients alimentaires en utilisant des masses de bouillon solides ou des mélanges de bouillon mous ou désagrégés,
**caractérisé en ce que** l'article de bouillon est un article de bouillon formé et à plusieurs composants, lequel présente au moins deux volumes partiels différenciables entre eux visuellement et/ou tactilement, lesquels correspondent à des ingrédients alimentaires ayant différentes compositions, l'article de bouillon à plusieurs composants :
- étant un corps formé fabriqué par pression, moulage, formage ou extrusion,
- étant un corps formé enveloppé par un matériau d'emballage de type papier ou de type film,
le corps formé enveloppé par le matériau d'emballage étant composé d'au moins deux volumes partiels en forme de couche, l'un de ceux-ci étant formé par une masse désagrégée sans cohésion interne.

2. Article de bouillon à plusieurs composants selon la revendication 1,
**caractérisé en ce que** les masses de bouillon qui constituent les différentes sections comprennent différents colorants alimentaires.

3. Article de bouillon à plusieurs composants selon l'une des revendications précédentes,
**caractérisé en ce que** les différentes sections présentent des rugosités de surface différentes et/ou des profils de surface différents.

4. Article de bouillon selon la revendication 1,
**caractérisé en ce que** la masse molle ou désagrégée est une masse constituée de fragments de plantes, en particulier de flocons d'herbes, d'épices et / ou de bouts de légumes.

5. Article de bouillon à plusieurs composants selon l'une des revendications précédentes,
**caractérisé en ce que** les différents masses de bouillon et mélanges de bouillon combinés dans l'article de bouillon à plusieurs composants sont choisis parmi les masses de bouillon et mélanges de bouillon pour bouillons de viande et bouillons de légumes.

6. Article de bouillon à plusieurs composants selon la revendication 5,
**caractérisé en ce que** les masses de bouillon pour bouillons de viande sont celles pour un bouillon de viande de boeuf, un bouillon de viande de porc ou un bouillon de poulet, et les masses de bouillon pour les bouillons de légumes sont celles pour des bouillons à base d'oignons, d'ail, de tomate, d'herbes et/ou d'épices.

7. Article de bouillon à plusieurs composants selon l'une des revendications précédentes,
**caractérisé en ce qu'**il est un bouillon cube dur ou mou pour la préparation de bouillons, de sauces ou de soupes.
